# EUROPEAN PATENT APPLICATION

(11) **EP 4 400 807 A1**
(43) Date of publication of application: **17.07.2024**
(21) Application number: 23790531.0
(22) Date of filing: 15.08.2023
(51) Int. Cl.: G01B 15/00, G01N 29/04

(54) **METHOD AND APPARATUS FOR MEASURING FUSION WIDTH OF T-SHAPED ELECTRON BEAM WELD**

(30) Priority: 28.11.2022 CN 202211503741
(71) Applicant: Xi'an Space Engine Company Limited, Xi'an, Shaanxi 710100 (CN)
(72) Inventor: WANG, Jianchao, Xi'an Shaanxi 710100 (CN); WANG, Yonghong, Xi'an Shaanxi 710100 (CN); PAN, Zhaoyi, Xi'an Shaanxi 710100 (CN); CHEN, Shaobin, Xi'an Shaanxi 710100 (CN); ZHANG, Peng, Xi'an Shaanxi 710100 (CN); ZHAO, Can, Xi'an Shaanxi 710100 (CN); WANG, Dongfang, Xi'an Shaanxi 710100 (CN)
(74) Representative: Vitina, Maruta
(86) International application number: PCT/CN2023/113166
(87) International publication number: WO 2024/113960

(57) **Abstract**

This application discloses a method and apparatus of detecting a fusion width of a T-type electron beam weld. The method includes the following steps. A preset reference block is detected using an ultrasonic scanning detection system to determine a weld fusion boundary. A first scanning signal corresponding to the to-be-detected piece is acquired by the ultrasonic scanning detection system. A first scanning image of reflected waves from surfaces of multiple welds is generated according to the first scanning signal. The reflected wave signals in the first scanning signal are normalized according to the first scanning image to obtain a second scanning signal. A second scanning image is generated according to the second scanning signal. This application enables the rapid and precise detection of fusion width of a T-type electron beam weld.

## Description

### TECHNICAL FIELD

This application relates to ultrasonic detection, and more particularly to a method and device for detecting a fusion width a T-type electron beam weld.

### BACKGROUND

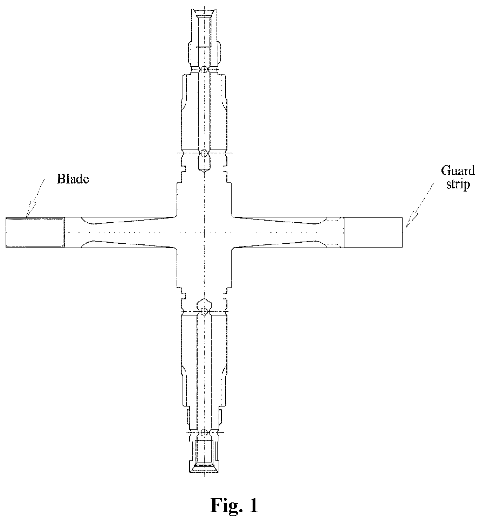

The rotor assembly has a revolution body structure, where the horizontal plate is a full circle of a guard strip, and the vertical plate is a blade on the revolution body. The guard strip and the blade are connected through a T-type electron beam weld. The weld connection strength is crucial because the rotor assembly is operated at a high speed, and the main index associated with the weld connection strength is the fusion width of the weld (referred to as fusion width hereinafter). The rotor assembly is structurally shown in Fig. 1.

At present, the fusion width of the weld can be detected by X-ray. Unfortunately, as the rotor assembly is a body of revolution, X-rays cannot penetrate the weld due to the thickness and structure of the rotor assembly when the irradiating direction is perpendicular to the surface of the weld, and moreover, if the irradiating direction is parallel to the weld, the fusion zone cannot be displayed. Therefore, the X-ray cannot be applied to the detection of the fusion width of the T-type electron beam weld of the rotor assembly. In addition, the horizontal plate of the rotor assembly is an annular guard strip having a thickness of merely 1 mm, and the vertical plate is a blade, while the entire product has 53 welds, rendering the weld width narrow. Therefore, a high-precision and rapid detection method is required.

### SUMMARY

To overcome the problem that the existing detection methods cannot achieve the precise and rapid detection of fusion width of a T-type electron beam weld, the present application provides a method and device for detecting a fusion width of a T-type electron beam weld. In this application, an ultrasonic scanning and detection system is utilized to automatically detect the electron beam welds, and multiple welds can be detected at the same time. In addition, reflected wave signals are normalized according to a scanning image to obtain a processed scanning image. Specifically, the surface reflected wave monitoring technology is used herein to monitor changes in the surface morphology of the welds, and compensate for the incident acoustic wave energy according to the morphological changes, so as to make the acoustic wave energy reaching the fusion surface of the welds uniform, thereby eliminating the influence of the surface morphology changes on the detection results and enabling accurate detection of the fusion width of the welds.

The technical solutions of the present disclosure are described below.

This application provides a method for detecting a fusion width of a T-type electron beam weld, comprising:
detecting a preset reference block using an ultrasonic scanning detection system to determine a weld fusion boundary, wherein product parameters and weld parameters of the preset reference block are the same as those of a to-be-detected piece;
acquiring, by the ultrasonic scanning detection system, a first scanning signal corresponding to the to-be-detected piece; and generating a first scanning image of reflected waves from surfaces of a plurality of welds according to the first scanning signal, wherein the first scanning signal comprises reflected wave signals from the surfaces of the plurality of welds; and
normalizing the reflected wave signals in the first scanning signal according to the first scanning image to obtain a second scanning signal; generating a second scanning image according to the second scanning signal; and measuring a fusion width of each of the plurality of welds according to parameters of the weld fusion boundary and the second scanning image.

In some embodiments, the step of detecting a preset reference block using an ultrasonic scanning detection system to determine a weld fusion boundary comprises:
placing an ultrasonic probe of the ultrasonic scanning detection system perpendicular to a weld on the preset reference block; and emitting a first ultrasonic wave to be perpendicularly incident on a surface of the weld on the preset reference block;
adjusting ultrasonic parameters to acquire a reflected wave signal from a surface of a weld on the preset reference block with a specified slot width; and generating a third scanning image based on the reflected wave signal from the surface of the weld on the preset reference block with the specified slot width; and
analyzing the third scanning image to determine the weld fusion boundary.

In some embodiments, the step of analyzing the third scanning image to determine the weld fusion boundary comprises:
analyzing the third scanning image to determine a height of a reflected wave from the surface of the weld on the preset reference block; and
multiplying the height of the reflected wave by a preset ratio to obtain the weld fusion boundary.

In some embodiments, the step of acquiring, by the ultrasonic scanning detection system, a first scanning signal corresponding to the to-be-detected piece comprises:
placing the ultrasonic probe of the ultrasonic scanning detection system perpendicular to the plurality of welds on the to-be-detected piece to perpendicularly emit a second ultrasonic wave to the surfaces of the plurality of welds on the to-be-detected piece; and
collecting the reflected wave signals from the surfaces of the plurality of welds on the to-be-detected piece and a reflected wave signal from a bottom surface of a horizontal plate to obtain the first scanning signal.

In some embodiments, the preset reference block has a plurality of welds respectively having a slot width of 0 mm, 0.2 mm, 0.4 mm, 0.6 mm and 0.8 mm; wherein one of the plurality of welds on the preset reference block having a slot width of 0.4 mm is the weld with the specified slot width.

In some embodiments, the welding seam on the preset reference block has a slot width of 0.4 mm.

In some embodiments, the step of normalizing the reflected wave signals in the first scanning signal according to the first scanning image to obtain a second scanning signal comprises:
determining scanning data of the first scanning signal based on the first scanning image; and generating characteristic information of the reflected waves from the surfaces of the plurality of welds based on the scanning data, wherein the characteristic information comprises amplitude information and position information of a reflected wave at each point on the surfaces of the plurality of welds; and
comparing the characteristic information of the reflected wave at each point with a specified value to calculate a relative gain value; and obtaining the second scanning signal based on the relative gain value of each point.

In some embodiments, the step of generating a second scanning image according to the second scanning signal comprises:
performing gain calculation on a height of a reflected wave corresponding to the relative gain value of each point in the second scanning signal to obtain normalized characteristic information of the reflected waves; and
generating the second scanning image based on the normalized characteristic information.

Compared to the prior art, this application has the following beneficial effects.

In this application, an ultrasonic scanning and detection system is utilized to automatically detect the welding seams of the electron beam, and a number of weld seams can be detected at the same time. In addition, reflected wave signals are normalized according to a scanning image to obtain a processed scanning image, that is, the surface reflected wave monitoring technology is used herein to monitor changes in the surface morphology of the welding seams, and compensate for the incident acoustic wave energy according to the changes in the surface morphology, so as to make the acoustic wave energy reaching the fusion surface of the welding seams uniform, thereby eliminating the influence of the changes in the surface morphology on the detection results and enabling accurate detection of the fusion width of the welding seams.

### BRIEF DESCRIPTION OF THE DRAWINGS

Fig. 1 is a schematic diagram of a rotor assembly in the prior art;
Fig. 2 is a flow chart of a method for detecting a fusion width of a T-type electron beam weld according to an embodiment of the present disclosure;
Fig. 3 is a schematic diagram of a reference block according to an embodiment of the present disclosure; and
Fig. 4 is a schematic diagram of a to-be-detected piece according to an embodiment of the present disclosure.

### DETAILED DESCRIPTION OF EMBODIMENTS

The embodiments described in the solutions provided by the present application are merely a part of the embodiments of the present application. Based on the embodiments in this application, all other embodiments obtained by one of ordinary skill in the art without paying creative effort shall fall within the scope of protection of this application.

To better understand the above technical solutions, the present application will be described in detail below with reference to the accompanying drawings and specific embodiments. It should be understood that the embodiments of the present application and the specific features therein are detailed descriptions of the technical solutions of the present application, rather than limitations on the technical solutions of the present application. The embodiments of the present application and the technical features in the embodiments can be combined with each other without any conflicts.

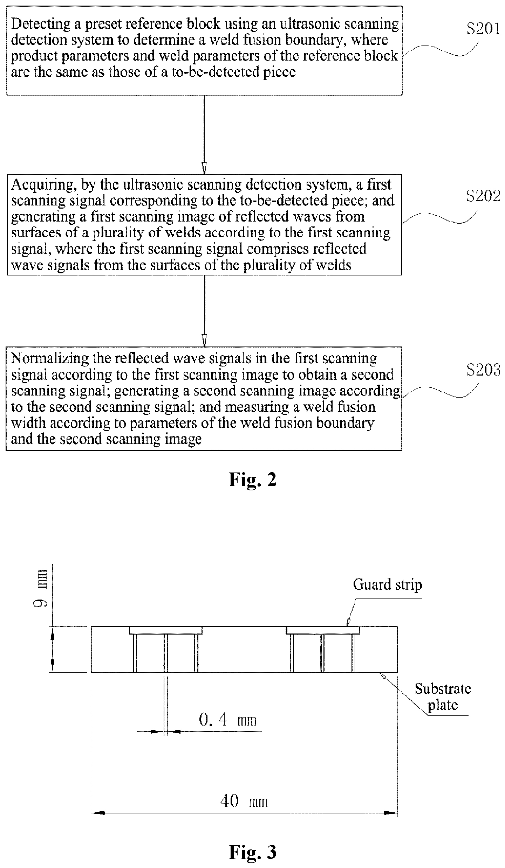

The following is a further detailed description in conjunction with the accompanying drawings of a method for detecting a fusion width of a T-type electron beam weld provided herein, which includes the following steps (the flow chart of the method is shown in Fig. 2).

(S201) A preset reference block is detected using an ultrasonic scanning detection system to determine a weld fusion boundary, where product parameters and weld parameters of the preset reference block are the same as those of a to-be-detected piece.

Specifically, in an embodiment, the ultrasonic scanning detection system is, for example, a water immersion ultrasonic C-scanning detection system. The water immersion ultrasonic C-scanning detection system includes an ultrasonic probe, an ultrasonic flaw detector, a scanning and imaging system (e.g., an A/B/C scanning and imaging system), a single-chip microcomputer, and a computer system master control platform. The computer sends a control signal to the single-chip microcomputer, and the control signal is transmitted to a scanning mechanism. The scanning mechanism drags the ultrasonic probe for scanning in the tank, and at the same time, the detection signal detected by the ultrasonic flaw detector will be transmitted to the computer in real time. Subsequently, the location of the probe and the detection signal are integrated by the computer to form scanning images.

In an embodiment, the step of "a preset reference block is detected using an ultrasonic scanning detection system to determine a weld fusion boundary" includes the following steps. An ultrasonic probe of the ultrasonic scanning detection system is placed perpendicular to a weld on the preset reference block to perpendicularly emit ultrasonic waves to the weld on the preset reference block. Ultrasonic parameters are adjusted to acquire a reflected wave signal from a surface of a weld on the preset reference block with a specific slot width. A third scanning image is generated based on the reflected wave signal from the surface of the weld on the preset reference block with the specific slot width. The third scanning image is analyzed to determine the weld fusion boundary. It should be understood that the welding seam used above and hereinafter refers to the welding seam of the electron beam.

The preset reference block is welded with an electron beam using a plate whose material and thickness are the same as the to-be-detected piece, with the same welding parameters as the to-be-detected piece. For example, the reference block is welded with 5 welds. After the welding is completed, a flat-bottomed groove is processed at the fusion surface of the welding seam, and the slot widths of the welding seams are 0 mm, 0.2 mm, 0.4 mm, 0.6 mm, and 0.8 mm, respectively.

In an embodiment, the step of "the third scanning image is analyzed to determine the weld fusion boundary" is performed through the following steps. The third scanning image is analyzed to determine a height of a reflected wave from the surface of the weld on the preset reference block. The height of the reflected wave is multiplied by a preset ratio to obtain weld fusion boundary. For example, the preset reference block has a plurality of welds varied in slot width, and the slot width is selected from the group consisting of 0 mm, 0.2 mm, 0.4 mm, 0.6 mm and 0.8 mm, where the preset slot width is 0.4 mm. The preset reference block is tested, and the testing parameters are adjusted according to the test results so that the weld with a slot width of 0.4 mm can be detected. The fused surface boundary is determined on the generated scanning image so that the difference between the fusion width obtained by ultrasonic measurement and the slot width is less than 0.1 mm.

Fig. 3 is a schematic diagram of a preset reference block according to an embodiment of the present disclosure

In an embodiment, as shown in Fig. 3, the preset reference block includes a guard strip, a substrate, and welding seams. For example, the preset reference block has a length of 40 mm and a width of 9 mm. The weld fusion boundary is determined by testing the preset reference block using the ultrasonic scanning detection system. For example, the preset reference block is tested, and the testing parameters are adjusted according to the test results so that the welding seam with a slot width of 0.4 mm can be detected. The fused surface boundary is determined on the generated scanning image so that the difference between the fusion width obtained by ultrasonic measurement and the slot width is less than 0.1 mm.

(S202) A first scanning signal corresponding to to-be-detected piece is acquired by the ultrasonic scanning detection system. A first scanning image of reflected waves from surfaces of a plurality of welds is generated according to the first scanning signal, where the first scanning signal comprises reflected wave signals from the surfaces of the plurality of welds.

In an embodiment, the step of "a first scanning signal corresponding to to-be-detected piece is acquired by the ultrasonic scanning detection system" includes the following steps. The ultrasonic probe of the ultrasonic scanning detection system is placed perpendicular to the plurality of welds on the to-be-detected piece to perpendicularly emit a second ultrasonic wave to the surface of the plurality of welds on the to-be-detected piece. The reflected wave signals from the surfaces of the plurality of welds on the to-be-detected piece and a reflected wave signal from a bottom surface of a horizontal plate are collected to obtain the first scanning signal.

Specifically, the to-be-detected piece (e.g., a rotor assembly) is arranged on a fixture. The fixture clamps the to-be-detected piece to ensure that the to-be-detected piece does not shake when rotated in the detection device. The coaxiality of the axis of the to-be-detected piece with the axis of the rotary table of the detection device is less than 0.01 mm. The ultrasonic probe of the ultrasonic scanning detection system is placed perpendicular to a weld on the to-be-detected piece to perpendicularly emit the ultrasonic wave to the weld. Two gates are provided, where one gate is for collecting the reflected wave signal from the surface of the weld, and the other gate is for collecting the reflected wave signal from the bottom surface of the horizontal plate, recording, e.g., the full-wave A-scanning signal, and generating the C-scanning image according to the full-wave A-scanning signal.

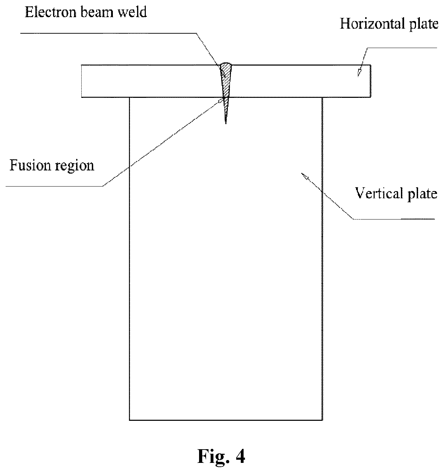

Fig. 4 is a schematic diagram of a to-be-detected piece according to an embodiment of the present disclosure.

In an embodiment, as shown in Fig. 4, the to-be-detected piece includes a horizontal plate and a vertical plate perpendicular to the horizontal plate. A welding seam of the T-type electron beam is provided perpendicular to the horizontal plate. An objective of this application is to accurately detect the fusion width of the welding seam of the T-type electron beam. In addition, as shown in Fig. 1, the rotor assembly further includes a fixture for fix the preset reference block or the to-be-detected piece. For example, when testing the to-be-detected piece, the to-be-detected piece is arranged and clamped by the fixture to ensure that the to-be-detected piece does not shake when rotated in the detection device. The coaxiality of the axis of the to-be-detected piece and the axis of the rotary table of the detection device is less than 0.01 mm.

(S203) The reflected wave signals in the first scanning signal are normalized according to the first scanning image to obtain a second scanning signal. A second scanning image is generated according to the second scanning signal. A fusion width of each of the plurality of welds is measured according to parameters of the weld fusion boundary and the second scanning image.

In an embodiment, the step of "the reflected wave signals in the first scanning signal are normalized according to the first scanning image to obtain a second scanning signal" includes the following steps. Scanning data of the first scanning signal is determined based on the first scanning image. Characteristic information of the reflected waves from the surfaces of the plurality of welds is generated based on the scanning data, where the characteristic information includes amplitude information and position information of a reflected wave at each point on the surfaces of the plurality of welds. The characteristic information of the reflected wave at each point is compared with a specified value to calculate a relative gain value to obtain the second scanning signal based on the relative gain value of each point.

In an embodiment, the step of "a second scanning image is generated according to the second scanning signal" includes the following steps. Gain calculation is performed on a height of a reflected wave corresponding to the relative gain value of each point in the second scanning signal to obtain normalized characteristic information of the reflected waves. The second scanning image is generated based on the normalized characteristic information.

Specifically, the scanning image of the reflected wave from the surface of the weld is analyzed. The energy of the reflected wave from the surface at each position is normalized, in the case where the incident wave energy changes due to changes in the surface topography of the weld and thus affects changes in the reflected wave from the bottom surface. Similar processes are made for the reflected wave signals from the bottom surface of the horizontal plate, so as to eliminate the effect of the surface topography of the weld. A scanning image of the weld is generated based on the processed scanning signal. Further, the detected scanning signal is output to generate the characteristic information of the reflected wave from the surface of the weld, which contains the reflected wave amplitude information and position information of each point. If there is no unevenness change in the surface topography of the weld, the height of the reflected wave is 100% of the desired value. The height of the reflected wave varies due to the change in the surface topography. Therefore, the height of the reflected wave at each position is compared with 100% such that the relative gain value is calculated.

Further, the scanning signal is output to generate characteristic information of the reflected wave of the fused surface of the welding region. The relative gain value obtained through surface wave normalization is used to calculate the corresponding gain for the height of the reflected wave corresponding to each position in the data, so as to obtain the characteristic information of the reflected wave of the fused surface of the welding region after the surface wave normalization. The processed scanning image (i.e., the above-described second scanning image) is generated based on the characteristic information. Subsequently, the fusion width is measured on the processed scanning image, and the boundary of the welding seam is determined based on the test results of the preset reference block. For the T-type electron beam weld, 10% of the height of the reflected wave is taken as the boundary of the weld, and the length of the vertical line between two boundaries is the fusion width of the weld.

In addition, in an embodiment, when detecting the fusion width of the welding seam on the preset reference block and the to-be-detected piece using the ultrasonic scanning detection system 11, the ultrasonic probe of the ultrasonic scanning detection system 11 is placed perpendicular to the surface of the welding seam, with the acoustic wave incident perpendicularly to the surface of the welding seam. Two gates are provided, where one gate is for collecting the reflected wave signal from the surface of the welding seam, and the other gate is for collecting the reflected wave signal from the bottom surface of the horizontal plate, recording the scanning signal (e.g., the full-wave A-scanning signal), and generating the scanning image (e.g., C-scanning image) according to the scanning signal. After that, the parameters (e.g., fusion boundary and fusion width) of the welding seam are determined by analyzing the scanning image.

In this application, an ultrasonic scanning and detection system is utilized to automatically detect the welding seams of the electron beam, and a number of weld seams can be detected at the same time. In addition, reflected wave signals are normalized according to a scanning image to obtain a processed scanning image, that is, the surface reflected wave monitoring technology is used herein to monitor changes in the surface morphology of the welding seams, and compensate for the incident acoustic wave energy according to the changes in the surface morphology, so as to make the acoustic wave energy reaching the fusion surface of the welding seams uniform, thereby eliminating the influence of the changes in the surface morphology on the detection results and enabling accurate detection of the fusion width of the welding seams.

Described above are merely illustrative of the disclosure, and are not intended to limit the disclosure. Though the disclosure has been described in detail above, various modifications and variations can still be made by those skilled in the art. It should be noted that those modifications and variations made without departing from the spirit of the disclosure shall fall within the scope of the present application defined by the claims.

## Claims

1. A method for detecting a fusion width of a T-type electron beam weld, comprising:
detecting a preset reference block using an ultrasonic scanning detection system to determine a weld fusion boundary, wherein product parameters and weld parameters of the preset reference block are the same as those of a to-be-detected piece;
acquiring, by the ultrasonic scanning detection system, a first scanning signal corresponding to the to-be-detected piece; and generating a first scanning image of reflected waves from surfaces of a plurality of welds according to the first scanning signal, wherein the first scanning signal comprises reflected wave signals from the surfaces of the plurality of welds; and
normalizing the reflected wave signals in the first scanning signal according to the first scanning image to obtain a second scanning signal; generating a second scanning image according to the second scanning signal; and measuring a fusion width of each of the plurality of welds according to parameters of the weld fusion boundary and the second scanning image.

2. The method according to claim 1, **characterized in that** the step of detecting a preset reference block using an ultrasonic scanning detection system to determine a weld fusion boundary comprises:
placing an ultrasonic probe of the ultrasonic scanning detection system perpendicular to a weld on the preset reference block; and emitting a first ultrasonic wave to be perpendicularly incident on a surface of the weld on the preset reference block;
adjusting ultrasonic parameters to acquire a reflected wave signal from a surface of a weld on the preset reference block with a specified slot width; and generating a third scanning image based on the reflected wave signal from the surface of the weld on the preset reference block with the specified slot width; and
analyzing the third scanning image to determine the weld fusion boundary.

3. The method according to claim 2, **characterized in that** the step of analyzing the third scanning image to determine the weld fusion boundary comprises:
analyzing the third scanning image to determine a height of a reflected wave from the surface of the weld on the preset reference block; and
multiplying the height of the reflected wave by a preset ratio to obtain the weld fusion boundary.

4. The method according to claim 3, **characterized in that** the step of acquiring, by the ultrasonic scanning detection system, a first scanning signal corresponding to the to-be-detected piece comprises:
placing the ultrasonic probe of the ultrasonic scanning detection system perpendicular to the plurality of welds on the to-be-detected piece to perpendicularly emit a second ultrasonic wave to the surfaces of the plurality of welds on the to-be-detected piece; and
collecting the reflected wave signals from the surfaces of the plurality of welds on the to-be-detected piece and a reflected wave signal from a bottom surface of a horizontal plate to obtain the first scanning signal.

5. The method according to any one of claims 1-4, **characterized in that** the preset reference block has a plurality of welds respectively having a slot width of 0 mm, 0.2 mm, 0.4 mm, 0.6 mm and 0.8 mm; wherein one of the plurality of welds on the preset reference block having a slot width of 0.4 mm is the weld with the specified slot width.

6. The method according to any one of claims 1-4, **characterized in that** the step of normalizing the reflected wave signals in the first scanning signal according to the first scanning image to obtain a second scanning signal comprises:
determining scanning data of the first scanning signal based on the first scanning image; and generating characteristic information of the reflected waves from the surfaces of the plurality of welds based on the scanning data, wherein the characteristic information comprises amplitude information and position information of a reflected wave at each point on the surfaces of the plurality of welds; and
comparing the characteristic information of the reflected wave at each point with a specified value to calculate a relative gain value; and obtaining the second scanning signal based on the relative gain value of each point.

7. The method according to claim 6, **characterized in that** the step of generating a second scanning image according to the second scanning signal comprises:
performing gain calculation on a height of a reflected wave corresponding to the relative gain value of each point in the second scanning signal to obtain normalized characteristic information of the reflected waves; and
generating the second scanning image based on the normalized characteristic information.
